# EUROPEAN PATENT SPECIFICATION

(11) **EP 0 919 523 B1**
(45) Date of publication and mention of the grant of the patent: **15.08.2007**
(21) Application number: 98309730.4
(22) Date of filing: 26.11.1998
(51) Int. Cl.: C02F 1/52, C02F 9/00

(54) **Method for removing colloidal and other suspended particles from lightly polluted water**
Verfahren zur Entfernung von Kolloidalen und anderen suspendierten Teilchen aus leicht verunreinigtem Wasser
Procédé d'élimination des particules colloidales et d'autre matière en suspension des eaux faiblement polluées

(30) Priority: 27.11.1997 GB 9725140
(43) Date of publication of application: 02.06.1999
(73) Proprietor: Kambanellas, Chrysostomos Andreas, 1685 Nicosia (CY)
(72) Inventor: Kambanellas, Chrysostomos Andreas, 1685 Nicosia (CY)
(74) Representative: Beresford, Keith Denis Lewis

(56) References cited:
- WO-A-88/05334
- GB-A- 2 256 155
- SU-A- 1 089 060
- US-A- 3 984 312
- US-A- 4 250 030
- US-A- 4 910 010

## Description

This invention relates to a method for removing colloidal and other suspended particles from lightly polluted water. It also provides a water treatment process in which the amount of dissolved boron compounds can be reduced.

International patent application WO-A-88/05334 discloses a grey water treatment process in which inter alia a liquid flocculation agent which may contain ferric sulphate, ferrous sulphate or sulphuric acid is used.

The present invention concerns the treatment of lightly polluted water such as grey water (i.e. domestic water predominantly contaminated with soap and detergents), underground water from built up areas and other lightly polluted water. The water is treated with a solution containing complex mixture of chemicals which is the result of natural oxidation of iron pyrites and its surrounding rock formations which contain ferric sulphate, ferrous sulphate, sulphuric acid and a variety of trace elements. Addition of this complex solution of dissolved chemicals causes reactions to take place within the treated water, and flocculation and sedimentation of most of the colloidal or otherwise suspended particles.

It has also been found that where the waste water is contaminated with boron, a significant reduction (more than 40%) of boron contaminants takes place. The lightly polluted water is then passed through a bed of particulate mine waste material and then to a tank where separation can take place by flocculation and sedimentation. In a variant of the invention, there are preferably two beds of particulate solid material and two flocculation and sedimentation tanks connected in series.

Although the invention can be used to remove colloids and other suspended particles and to reduce the amount of boron in any lightly polluted water and/or underground water, including waste water containing large amounts of boron, the invention is particularly advantageous for the treatment of household grey water (i.e. liquids mainly contaminated with soap and detergents). Such household grey water can be waste water discharged from baths, showers, hand or wash basins, washing machines, dishwashers, and from the rinsing of fruits, vegetables and dishes. The treated effluent is sufficiently pure to be re-used in toilets and for irrigation or watering of the garden surrounding the building from which the grey water has been collected. This enables the amount of mains water of drinking quality required by the household to be reduced.

Removal of suspended particles is by flocculation and sedimentation.

Various embodiments of the invention will now be described, by way of example only with reference to the accompanying drawings in which:
Figure 1 is a diagrammatic view of the water system of a bathroom and kitchen of a house or flat arranged so that the treatment method of the invention can be carried out;
Figure 2 is a diagram of a grey water treatment plant.

As explained in patent application WO-A-88/05334, in most areas of the world where sewerage systems exist, the effluents from sinks, baths, laundries, toilets and kitchens are all fed into the same sewerage system. However, as explained in that application, the effluents can be classified into "grey" water and "black" water. The grey water comes from kitchen sinks where the operations carried out are limited to the washing of dishes, fruits and vegetables, from clothes washing machines and dishwashers, and in the bathroom from hand basins and from the bath. This grey water has a relatively light level of pollution, and the predominant pollutants are soap and detergents together with some suspended solids. In contrast, black water is derived from sinks equipped with a grinder for grinding up and assisting with the disposal of food, and from a toilet. The level of contamination of this "black" water is much more serious.

Although the volume of grey water discharged from a single dwelling unit during each day can be quite considerable, apart from the disclosure in the earlier patent referred to above, there have been no significant proposals for recycling this waste water in an economic and substantially maintenance free manner. A facility for recycling grey water is of particular value in arid or semi-arid regions of the world where the provision of a satisfactory water supply poses a constant problem because of the low or uneven distribution of rainfall and high rates of evaporation and transpiration from plants. Even in areas with relatively high rainfall, there may be times when it is difficult to maintain an adequate supply of water.

The present method of waste water treatment enables grey water to be conserved and re-used on an individual household basis. The installation of a grey water treatment plant and its use in the method of the invention in individual houses, groups of houses, blocks of flats or hotel can provide the advantages that:
(a) used water of drinking quality is conserved so that it can be re-used for flushing toilets, watering gardens and for irrigation;
(b) the overall consumption of water is reduced which is an advantage during the dry period;
(c) domestic and commercial water costs are reduced; and
(d) sanitary problems such as the saturation of soil around absorption pits and pollution of underground water are reduced or alleviated.

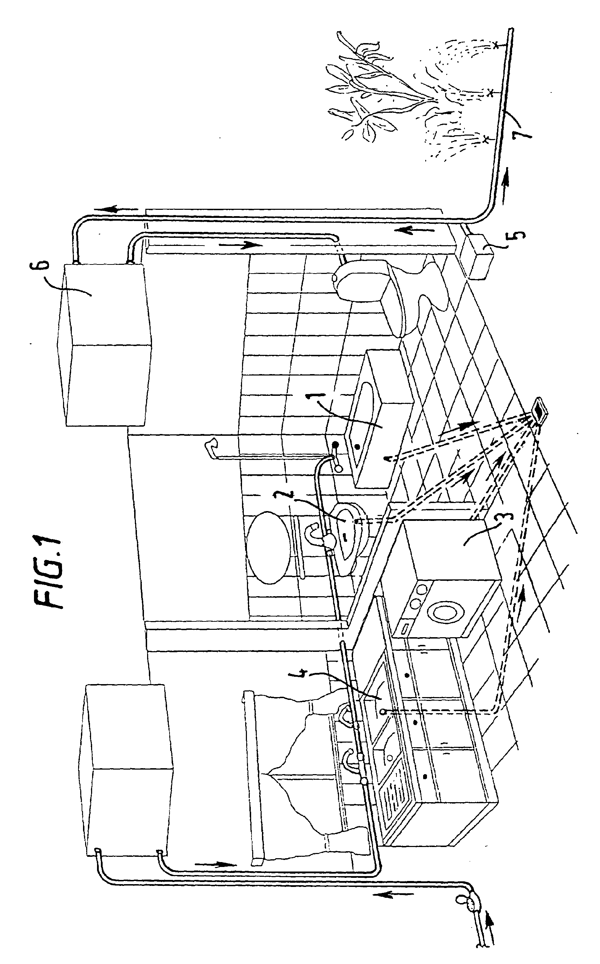

Figure 1 shows how grey water is collected from a residence or household. Pipes lead from the outlets to a bath or shower 1, a bathroom, hand or wash basin 2, a domestic washing machine 3 and a sink 4 for the rinsing and washing of dishes, fruits and vegetables. It will be noted that in the adjacent sink, which is fitted with a food grinder (not shown) the effluent is handled through different channels, as is the effluent from the toilet.

The grey water outflows from the sources 1-4 are combined and fed to a treatment plant 5. The treated effluent is supplied to a tank 6 which can be used as a source of water for flushing the toilet, and can be supplied through a pipe 7 where it can be used for garden watering or for irrigation. The principal characteristics of household grey water which is collected as described above are that:
(a) the turbidity is usually between 410 and 470 NTU, although turbidity may sometimes fall below this range; and
(b) the diameter of the suspended particles is generally less than 188 µm, and 50% of this suspended particles are of size less than 6.2 µm.

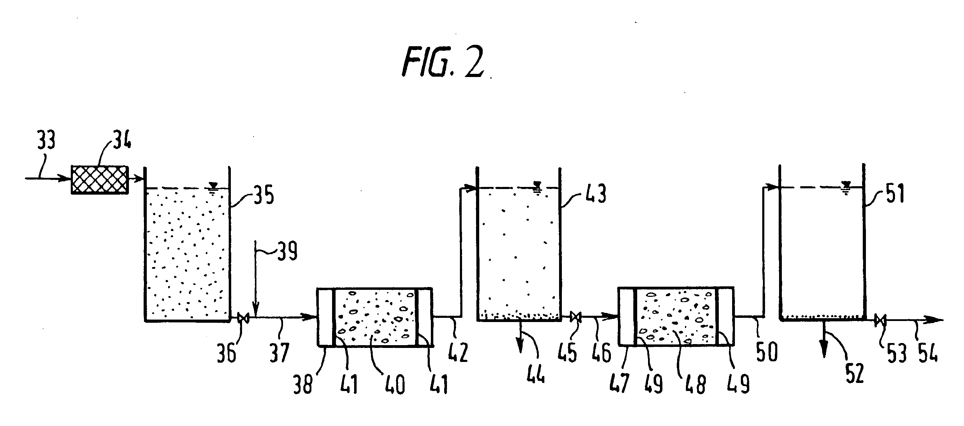

Figure 2 diagrammatically shows the grey water treatment plant. Incoming grey water flows from inlet pipe 33 and filter 34 for removing hairs, threads and fibres etc into a collection tank 35 from which it is discharged through a valve and/or pump 36 and pipe 37 into a first treatment vessel 38. Cyprofloc in liquid form is added via line 97 to the material in pipe 37 before it enters the treatment vessel 38. The first treatment vessel 38 contains a granular Cyprofloc mine waste material having a grain size typically about 0.5 or less to 100 mm or above. The granular Cyprofloc material 40 is contained within a body of flexible open-celled plastics foam 41, e.g. a polyurethane foam, with a wall thickness of from 1 to 5 cm. Instead of the plastics foam 41, plastic mesh having a range of different opening sizes and of wall thickness 3 mm to 10 mm may be used, and the mesh may be in addition to, or as an alternative to, the foam. It has been found that the treatment vessel 38 produces very efficient mixture of grey water with the liquid Cyprofloc, and also that the granular Cyprofloc material 40 dissolves slowly in the grey water.

A line 42 leads from the first treatment vessel 38 to a flocculation and sedimentation tank 43. The suspended solids settle as a sludge which can be removed at outlet 44. The grey water is removed from the tank 43 by a regulating valve and/or pump 45, and flows via a line 46 to a second treatment vessel 47 in which Cyprofloc 48 in granular form as set out above is located inside a flexible polyurethane foam 49 and/or plastics mesh material. If desired, the vessel 47 may simply contain the granular Cyprofloc without any containing foam or mesh. The grey water in the second treatment vessel 47 is polished by an additional small dosage of Cyprofloc which dissolves from the solid particles present.

The grey water passes from the vessel 47 via pipe 50 to a treated effluent storage tank 51. A limited flocculation takes place in the tank 51 and suspended solids settle as a sludge which is removed at outlet 52. The treated effluent is withdrawn through valve and/or pump 53 and can be reused for flushing toilets or for garden watering as explained above.

In the operation of the illustrated grey water treatment plant, a step-by-step procedure is followed. The grey water passes from the collection tank 35 to the flocculation and sedimentation tank 43 where it will typically remain for a residence time of 3 to 24 hours. Incoming grey water remains in the collection tank 33 until the content of grey water in the flocculation and sedimentation tank 43 has been passed downstream to the treated effluent storage tank 51. Thus, the treated effluent storage tank 51 is emptied, then the contents of the sedimentation tank 43 are fed to the tank 51, and untreated grey water is allowed to collect in the tank 35.

With this arrangement upflow and downflow filters are not so necessary because, with a residence time of 3 to 24 hours, or even more, almost all the suspended solids in the grey water settle in the tank 43, and residual material settles in the storage tank 51.

Cyprofloc is a red waste water from the copper and iron sulphates open-cast mines of Cyprus which contains copper and iron sulphates and can be freely found in its natural state in these abandoned mines.

Cyprofloc, because it contains ferrous sulphate, ferric sulphate, sulphuric acid and a great variety of trace elements, is valuable as an additive for irrigation, particularly where the local soil conditions are alkaline. Samples of Cyprofloc containing copper and iron sulphates were collected from three open-cast mines of Cyprus, for chemical analysis. Three categories of hydrated iron sulphates were also collected from one ore mine. These three categories of Melandirite were termed white (FeSO₄4H₂O) , blue-green (FeSO₄5H₂O) and yellow-red (FeSO₄7H₂O). By the addition of measured quantities of these collected hydrated iron sulphates to tapwater, or to Cyprof loc as it is in its natural state, new solutions of Cyprofloc with different concentrations were prepared. The results of the chemical analysis of ten of the above samples made by the Chemical Laboratory of the Geological Survey Department, Nicosia Cyprus, together with the description of the preparation of these new solutions of Cyprofloc, are shown in Tables 1 and 2 below.

**TABLE 1: CYPROFLOC ANALYSIS**

| Sample | Iron Fe (ppm) | Copper Cu (ppm) | Zinc Zn (ppm) | Nickel Ni (ppm) | Cobalt Co (ppm) | Manganese Mn (ppm) | Lead Pb (ppm) | Sulphate SO₄ (ppm) |
|---|---|---|---|---|---|---|---|---|
| 1 | 2940 | 621 | 231.00 | 9.50 | 67.50 | 700.00 | NIL | 31555 |
| 2 | 622 | 39 | 55.00 | 3.30 | 35.25 | 198.00 | NIL | 33395 |
| 3 | 86 | 29 | 105.00 | NIL | NIL | 5.20 | NIL | 3075 |
| 5 | 1122 | 47 | 56.00 | 1.50 | 5.00 | 130.00 | NIL | 21990 |
| 6 | 11111 | 1097 | 237.00 | 9.00 | 80.00 | 682.00 | NIL | 46445 |
| 7 | 446 | 41 | 59.00 | 4.00 | 39.35 | 260.00 | NIL | 41380 |
| 8 | 1277 | 7 | 1.50 | 0.40 | 0.50 | 2.70 | NIL | 6024 |
| 9 | 2720 | 62 | 64.00 | 3.60 | 38.10 | 200.00 | NIL | 39350 |
| 10 | 1980 | 49 | 132.00 | 4.70 | 39.00 | 281.00 | NIL | 45560 |

**TABLE 2: THE ORIGIN OF THE PREPARED CYPROFLOC SOLUTIONS**

| Sample | Description |
|---|---|
| 1 | Cyprofloc from Skouriotissa Mine, collected in September |
| 2 | Cyprofloc from Mitsero Mine, collected in September |
| 3 | Cyprofloc from Mathiatis Mine, collected in September |
| 5 | Tapwater from Nicosia Domestic Water Supply with the addition of 20 gm/l (grams per litre) of each of the white, blue-green and yellow-red hydrated iron-sulphates collected from Mitsero Mine. |
| 6 | Cyprofloc from Skouriotissa Mine, collected in September |
| 7 | Cyprofloc from the above Sample 2, with the addition of 20 gm/l of collected white hydrated iron sulphates from the Mitsero Mine. |
| 8 | Tapwater from Nicosia Domestic Water Supply with the addition of 20 gm/l of collected yellow-red hydrated iron-sulphates from Mitsero Mine. |
| 9 | Cyprofloc from the above Sample 2 with the addition of 20 gm/l of collected yellow-red hydrated iron-sulphates from Mitsero Mine. |
| 10 | Cyprofloc from the above Sample 2 with the addition of 20 gm/l of each of the white, blue-green and yellow-red hydrated iron-sulphates collected from Mitsero Mine. |

The concentration of Cyprofloc varies throughout the year not only between different open-cast mines but also in the same mine. In summer when there is no rain and a high rate of evaporation (approximately 1.5 metre per year) the concentration of Cyprofloc is high. In winter when there is rain and the evaporation is low, the concentration of Cyprofloc is also low. For this reason the dose of Cyprofloc is not only proportional to the quantity and quality of the lightly polluted water but also to the concentration of Cyprofloc.

The red waste water has sufficient power to promote floc growth that it is not necessary to agitate the liquids in the tank 43 by means of a mechanical mixer. The addition of the red waste water enables a large amount of the suspended particles and other materials to agglomerate into flocs, and settle so that they can be removed as a sludge from outlet 44.

The Cyprofloc in granular form containing iron and copper sulphates is collected from the same areas as the Cyprofloc in liquid form i.e. from copper and iron sulphate open cast mines of Cyprus. It contains hydrated iron sulphates, ferric sulphate, ferrous sulphate and a variety of trace elements, rock formations etc.

It will be appreciated that liquid and granular waste materials from mines in other countries may be used in place of Cyprofloc obtained from pyrite mines of Cyprus without departing from the invention.

## Claims

1. A method of purifying water without filtering which comprises:
(a) collecting a stream of lightly polluted domestic waste water such as grey water, or lightly polluted underground water from built up or other areas;
(b) mixing the lightly polluted water with a solution which results from the natural oxidation of iron pyrites and its surrounding rock formations;
(c) passing the resulting mixture through a treatment vessel (38) containing bed of particulate mine waste material of particle size from 0.5 to 100 mm to provide mixing of the water and the solution, and wherein the mine waste material slowly dissolves in the mixture; and
(d) allowing suspended solids in the grey water to separate by floculation and sedimentation in a tank (43).

2. The method of claim 1, wherein the liquid from the tank (43) is fed through a second bed (47) of particulate mine waste material and then to a second tank (51) in which suspended solids are allowed to separate by floculation.

3. A non-filtering grey water treatment apparatus for performing the method of claim 1, comprising:
a collection tank (35) for collecting a predetermined volume of grey water;
a first treatment vessel (38) containing granular mine waste material having a particle size of from 0.5 to 100mm;
a sedimentation tank (43);
mixing means in a duct (37) connecting the collection tank (35) to the first treatment vessel (38) for mixing a treatment liquid with grey water passing along the duct (37); and
ducting (42) operable to carry the mixture of grey water and treatment liquid from the first treatment vessel to the sedimentation tank (43).

4. An apparatus according to claim 3, further comprising:
a second treatment vessel containing particulate mine waste material having a particle size of from 0.05 to 10mm;
a treated effluent storage tank (51); and
ducting (46, 50) to carry water from the sedimentation tank (43) to the second treatment vessel (47), and from the second treatment vessel (47) to the storage tank (51).

5. An apparatus according to claim 3 or claim 4, wherein the particulate mine waste material has a particulate size of 3mm to 10mm.

6. An apparatus according to any of claims 3 to 5, wherein the mine waste material contains hydrated iron sulphates, ferric sulphate or ferrous sulphate.

7. An apparatus according to any of claims 3 to 6, wherein the mine waste is derived from pyrite mining.

## Patentansprüche

1. Verfahren zum Reinigen von Wasser ohne Filtern, wobei
(a) ein Strom von leicht verschmutztem Hausabwasser, etwa "Grauwasser", oder leicht verschmutztem Untergrundwasser aus bebauten oder sonstigen Gebieten gesammelt wird,
(b) das leicht verschmutzte Wasser mit einer Lösung gemischt wird, die aus der natürlichen Oxidation von Eisenpyriten und ihren umgebenden Felsformationen resultiert,
(c) das sich ergebende Gemisch durch ein Behandlungsgefäß (38) geleitet wird, das ein Bett aus teilchenförmigem Zechenabfall mit einer Teilchengröße von 0,5 bis 100 mm enthält, um das Wasser mit der Lösung zu mischen, wobei sich der Zechenabfall langsam in dem Gemisch löst, und
(d) man die suspendierten Feststoffe in dem Abwasser durch Flockung und Absetzen in einem Becken (43) sich abscheiden läßt.

2. Verfahren nach Anspruch 1, wobei die Flüssigkeit aus dem Becken (43) durch ein zweites Bett (43) aus teilchenförmigem Zechenabfall und dann in ein zweites Becken (51) geleitet wird, in dem man suspendierte Feststoffe durch Flockung sich abscheiden läßt.

3. Nicht-filternde Abwasser-Behandlungsvorrichtung zur Durchführung des Verfahrens nach Anspruch 1 mit
einem Sammelbecken (35) zum Sammeln einer vorbestimmten Abwassermenge,
einem ersten Behandlungsgefäß (38), das einen körnigen Zechenabfall mit einer Teilchengröße von 0,5 bis 100 mm enthält,
einem Absetzbecken (43),
einer Mischeinrichtung in einer Leitung (37), die das Sammelbecken (35) mit dem ersten Behandlungsgefäß (38) verbindet, um das die Leitung (37) durchströmende Abwasser mit einer Behandlungsflüssigkeit zu mischen, und
einer Leitungseinrichtung (42), die so betätigbar ist, daß sie das Gemisch aus Abwasser und Behandlungsflüssigkeit aus dem ersten Behandlungsgefäß in das Absetzbecken (43) fördert.

4. Vorrichtung nach Anspruch 3 mit ferner
einem zweiten Behandlungsgefäß, das teilchenförmigen Zechenabfall mit einer Teilchengröße von 0,05 bis 10 mm enthält,
einem Speicherbecken (51) für den behandelten Ausfluß und
einer Leitungseinrichtung (46, 50) zur Förderung von Wasser aus dem Absetzbecken (43) in das zweite Behandlungsgefäß (47) und aus diesem in das Speicherbecken (51).

5. Vorrichtung nach Anspruch 3 oder 4, wobei der teilchenförmige Zechenabfall eine Teilchengröße von 3 bis 10 mm hat.

6. Vorrichtung nach einem der Ansprüche 3 bis 5, wobei der Zechenabfall Eisensulfathydrate, Eisen(III)- oder Eisen (II)-Sulfat enthält.

7. Vorrichtung nach einem der Ansprüche 3 bis 6, wobei der Zechenabfall aus einer Pyritzeche stammt.

## Revendications

1. Procédé pour purifier l'eau sans filtration, qui comprend les étapes consistant à :
(a) recueillir un courant d'eau résiduelle domestique légèrement polluée telle des eaux ménagères, ou d'eau sous-terraine légèrement polluée provenant de zones bâties ou d'autres zones ;
(b) mélanger l'eau légèrement polluée à une solution qui résulte de l'oxydation naturelle de pyrites de fer et de leurs formations rocheuses environnantes ;
(c) faire passer le mélange résultant à travers un récipient de traitement (38) contenant un lit de matière résiduelle minière en particules ayant des dimensions de particule de 0,5 à 100 mm pour provoquer le mélange de l'eau et de la solution, la matière résiduelle minière se dissolvant lentement dans le mélange ; et
(d) laisser la matière solide en suspension dans les eaux ménagères se séparer par floculation et sédimentation dans un réservoir (43).

2. Procédé suivant la revendication 1, dans lequel le liquide provenant du réservoir (43) est passé à travers un second lit (47) de matière résiduelle minière en particules et ensuite à un second réservoir (51) dans lequel on laisse les matières solides en suspension se séparer par floculation.

3. Appareil de traitement non filtrant pour les eaux ménagères destiné à la mise en oeuvre du procédé de la revendication 1, comprenant :
un réservoir collecteur (35) pour recueillir un volume prédéterminé d'eaux ménagères ;
un premier récipient de traitement (38) contenant une matière résiduelle minière granulaire ayant des dimensions de particule de 0,5 à 100 mm ;
un réservoir de sédimentation (43) ;
un moyen de mélange dans un conduit (37) connectant le réservoir collecteur (35) au premier récipient de traitement (38) pour le mélange d'un liquide de traitement aux eaux ménagères passant le long du conduit (37) ; et
une canalisation (42) pouvant fonctionner pour faire passer le mélange d'eaux ménagères et de liquide de traitement du premier récipient de traitement au réservoir de sédimentation (43).

4. Appareil suivant la revendication 3, comprenant en outre :
un second récipient de traitement contenant une matière résiduelle minière en particules ayant des dimensions de particule de 0,05 à 10 mm ;
un réservoir de stockage d'effluent traité (51) ; et
une canalisation (46, 50) pour faire passer l'eau du réservoir de sédimentation (43) au second récipient de traitement (47), et du second récipient de traitement (47) au réservoir de stockage (51).

5. Appareil suivant la revendication 3 ou la revendication 4, dans lequel la matière résiduelle minière en particules a des dimensions de particule de 3 mm à 10 mm.

6. Appareil suivant l'une quelconque des revendications 3 à 5, dans lequel la matière résiduelle minière contient des sulfates de fer hydratés, du sulfate ferrique ou du sulfate ferreux.

7. Appareil suivant l'une quelconque des revendications 3 à 6, dans lequel la matière résiduelle minière provient de l'extraction des pyrites.
